# FASCICULE DE BREVET EUROPEEN

(11) **EP 0 812 440 B1**
(45) Date de publication et mention de la délivrance du brevet: **27.01.1999**
(21) Numéro de dépôt: 95910604.8
(22) Date de dépôt: 27.02.1995
(51) Int. Cl.: G06F 17/30

(54) **PROCEDE DE TRAITEMENT ET D'ACCES A DES OBJETS D'INFORMATION, NOTAMMENT DES DOCUMENTS, ET SYSTEME POUR SA MISE EN OEUVRE**
VERFAHREN ZUR VERARBEITUNG UND ZUM ZUGREIFEN AUF INFORMATIONSOBJEKTE, UNTER ANDEREM DOKUMENTE, SOWIE SYSTEM ZU SEINER DURCHFÜHRUNG
METHOD FOR PROCESSING AND ACCESSING DATA OBJECTS, PARTICULARLY DOCUMENTS, AND SYSTEM THEREFORE

(43) Date de publication de la demande: 17.12.1997
(73) Titulaire: INFORMATIONS MEDICALES & STATISTIQUES, F-92882 Nanterre CTC Cédex 9 (FR)
(72) Inventeur: RAMBAUD, Patrick, F-75009 Paris (FR); BAROGHEL, Thierry, F-75015 Paris (FR); CHARRE, Patrick, F-92290 Chatenay-Malabry (FR)
(74) Mandataire: Pontet, Bernard
(86) Numéro de dépôt international: FR9500229
(87) Numéro de publication internationale: WO9627161

(56) Documents cités:
- EP-A- 0 601 759
- EP-A- 0 631 245
- WO-A-93/22732
- WO-A-94/12944
- US-A- 5 369 763

## Description

La présente invention concerne un procédé de traitement et d'accès à des objets d'information, notamment des documents. Elle vise également un système pour la mise en oeuvre de ce procédé.

L'accroissement considérable des échanges d'information dans tous les domaines de l'activité humaine, notamment dans le domaine économique, a été rendu possible par le développement de procédés et de systèmes de traitement et de communication d'informations. On peut citer ainsi le développement des bases de données qui peuvent être aisément accessibles en ligne à travers des réseaux de télécommunication. Un autre mode de consultation des bases de données, hors ligne, qui connaît actuellement un développement considérable, consiste à utiliser des supports permanents d'information, notamment des disques CD-ROM (Compact-Disc Read-Only-Memory) ou CD-I (Compact-Disc Interactif), qui sont consultés par des utilisateurs de lecteurs appropriés associés à des micro-ordinateurs. Ce mode de consultation rencontre un succès grandissant du fait des capacités de stockage très élevées des disques CD-ROM et de la possibilité de traiter et stocker localement les informations consultées. Les disques CD-ROM produits et diffusés par l'opérateur ou le gestionnaire de la base de données incluent généralement, outre les données consultables, des modules logiciels de consultation, tandis que le micro-ordinaneur auquel est connecté le lecteur CD-ROM est doté d'un logiciel résident de recherche et de traitement.

Les objets actuellement stockées sur des disques CD-ROM présentent une très grande diversité, puisque dans les applications multimédia, ces objets incluent non seulement des données informatiques, des objets graphiques, des éléments sonores ou encore des séquences vidéo ou d'animation. Les logiciels de consultation associés aux lecteurs de CD-ROM offrent actuellement des possibilités déjà très étendues de recherche, d'accès aux informations, de traitement et d'affichage de ces informations. Un utilisateur peut ainsi naviguer d'un objet d'information à un autre, au gré de ses objectifs et de son cheminement au sein d'une base d'objets structurée. Une telle base d'objets structurée est déjà décrit dans le document de brevet US-A-5 369 763. Si la très grande capacité de stockage d'un support de type CD-ROM permet de stocker sans problème un grand nombre de pages de document, il devient cependant difficile, même pour un utilisateur averti, d'accéder en un temps raisonnable à un objet d'informations recherché, lorsque la base comporte plusieurs milliers de documents.

On entend par objet d'information, un ensemble de codes et de signes constituant un tout cohérent représentatif de données, d'informations de toute nature, texte, graphique, image, son.

On entend par document, un ensemble de données ou d'informations cohérentes relatives à un sujet ou un thème particulier, organisées en pages.

On connaît ainsi déjà des procédés pour traiter et accéder à des objets d'information, notamment des documents, comprenant :
- en au moins un site central :
   - des étapes pour collecter des objets préalablement élaborés et saisis,
   - des étapes pour classer les objets ainsi collectés, et
   - au moins une étape pour générer une base structurée contenant les objets ainsi classés,
- en au moins un site de production,
   - des étapes pour inscrire sur des supports permanents d'information la base structurée ainsi générée,
- et en plusieurs sites locaux de consultation,
   - des étapes pour accéder à un ou plusieurs objets recherchés au sein de la base structurée, ces étapes d'accès comprenant des étapes pour rechercher des objets et des étapes pour lire ces objets sur un support permanent d'information.

On peut citer à ce sujet des procédés de traitement et d'accès aux informations contenues dans des encyclopédies ou des dictionnaires, qui mettent en oeuvre une saisie massive préalable d'informations, un classement de ces informations, par exemple par ordre alphabétique ou de manière thématique, une inscription de ces informations traitées et classées sur des disques CD-ROM, la diffusion de ces disques et leur consultation par des utilisateurs sur des stations équipées de moyens de lecture appropriés. On peut également citer le cas de procédés de consultation de bases de données ce brevets sur disque CD-ROM.

Or, une simple adaptation de ces procédés connus, pour le traitement et la mise à disposition d'informations complexes, telles que des informations relatives à des réglementations qui doivent être constamment mises à jour et présentent plusieurs niveaux de complexité, est difficilement envisageable. Elle conduirait à des procédés qui seraient finalement d'un maniement difficile et impliqueraient une gestion lourde, notamment pour la mise à jour, lorsqu'il s'agirait de traiter un grand nombre d'objets tels que des documents relatifs aux réglementations internationales sur les médicaments. Le traitement de tels documents, collectés à partir d'un très grand nombre de sources, soumis à des mises à jour fréquentes et présentant une dimension géographique, temporelle et thématique, s'avérerait ainsi coûteux et d'accès difficile avec les procédés actuels.

Le but de l'invention est de remédier à ces inconvénients en proposant un procédé de traitement et d'accès à des objets d'information, qui permette, d'une part, une mise à jour aisée de la base documentaire destinée à être inscrite sur les supports permanents d'informations, et, d'autre part, un accès aisé à des objets recherchés au sein de la base.

Suivant l'invention, le procédé pour traiter et accéder à des objets d'information, notamment des documents, comprenant :
- en au moins un site central:,
   - des étapes pour collecter des objets,
   - des étapes pour classer les objets ainsi collectés, et
   - des étapes pour générer une base structurée contenant les objets ainsi classés,
   est caractérisé en ce que chaque étape de classement comprend :
- un regroupement des objets collectés, en des groupes d'objets associés respectivement à des zones géographiques données,
- une classification de chaque objet en plusieurs types d'objets,
- un premier classement, dans chaque groupe d'objets, des objets appartenant à l'un au moins des types d'objets, selon une table des matières comportant un ensemble Ce thèmes et commune à tous les groupes d'objets, cette table des matières étant associée à un premier plan de classement dit thématique,
- un second classement, dans chaque groupe d'objets, d'une partie des objets collectés constituant un groupe particulier d'objets, selon un second plan de classement dit hiérarcnique commun à tous les groupes d'objets,
et en ce qu'il comprend en outre, au sein du site central, une étape pour sélectionner au sein de chaque objet collecté des éléments-clés, ces éléments-clés étant regroupés au sein d'un thésaurus, et en ce que les étapes d'accès comprennent des étapes de sélection selon au moins un critère incluant un critère de sélection par élément-clé.

Les effets techniques obtenus avec le procédé selon l'information sont notamment la pertinence des textes au regard du domaine traité, la fraîcheur et l'exhaustivité de l'information, qu'il s'agisse de textes réglementaires ou d'informations pratiques, et la facilité de recherche d'un document de la base.

Avec le procédé selon l'invention, il devient possible de s'adapter au comportement d'un grand nombre d'utilisateurs, aux différentes fréquences de leurs besoins et à leur connaissance variable du domaine.

Suivant une forme préférée de mise en oeuvre du procédé selon l'invention, celui-ci comprend en outre,
- en au moins un site de production,
   - des étapes pour reproduire sur des supports permanents d'information la base structurée ainsi générée,
- et en plusieurs sites locaux de consultation,
   - des étapes pour accéder à un ou plusieurs objets au sein de la base structurée, ces étapes d'accès comprenant des étapes pour rechercher des objets sur un support permanent d'information,

caractérisé en ce que chaque étape pour accéder à un objet comprend en outre une étape pour sélectionner au moins une zone géographique suivie d'une étape pour naviguer au sein des zones géographiques sélectionnées, cette étape de navigation pouvant parcourir l'un quelconque des premier et second plans de classement.

Le procédé selon, l'invention est de préférence mis en oeuvre pour le traitement et l'accès à des documents, et les documents collectés sont classifiés par type en documents de base, documents de référence et notes.

Selon un autre aspect de l'invention, il est proposé un système pour traiter et accéder à des objets, pour la mise en oeuvre du procédé selon l'invention, comprenant :
- en au moins un site central,
   - des moyens pour collecter des objets,
   - des moyens pour classer les objets ainsi collectés, et
   - des moyens pour générer une base structurée contenant les objets ainsi classés,
- en au moins un site de production,
   - des moyens pour reproduire sur des supports permanents d'information la base structurée ainsi générée,
- et en plusieurs sites locaux de consultation,
   - des moyens pour accéder à un ou plusieurs objets au sein de la base structurée, ces moyens d'accès comprenant des moyens pour rechercher des objets sur un support permanent d'information,
caractérisé en ce que les moyens de classement comprennent :
- des moyens pour regrouper les objets collectés, en des groupes d'objets associés respectivement à des zones géographiques données,
- des moyens pour classifier chaque objet en plusieurs types d'objets,
- des moyens pour réaliser, dans chaque groupe d'objets, un premier classement des objets appartenant à l'un au moins des types d'objets, selon une table des matières comportant un ensemble de thèmes et commune à tous les groupes d'objets, cette table des matières étant associée à un premier plan de classement dit thématique,
- des moyens pour réaliser, dans chaque groupe d'objets, un second classement d'une partie des objets collectés constituant un groupe particulier d'objets, selon un second plan de classement dit hiérarchique commun à tous les groupes d'objets,
- des moyens pour sélectionner au sein de chaque objet collecté des éléments-clés et
- des moyens pour regrouper au sein d'un thésaurus ces éléments-clés.

Dans un mode de réalisation avantageux d'un système selon l'invention, les moyens pour accéder à un objet comprennent en outre des moyens pour sélectionner au moins une zone géographique et des moyens pour naviguer au sein des zones géographiques sélectionnées, ces moyens de navigation étant agencés pour parcourir l'un quelconque des premier et second plans de classement.

D'autres particularités et avantages de l'invention apparaîtront encore dans la description ci-après. Aux dessins annexés donnés à titre d'exemples non limitatifs :
- la figure 1 est un schéma synoptique des étapes de traitement du procédé selon l'invention, depuis la collecte de documents jusqu'à l'édition des supports permanents d'information ; et
- la figure 2 est un schéma synoptique des étapes accès aux documents, dans le procédé selon l'invention.

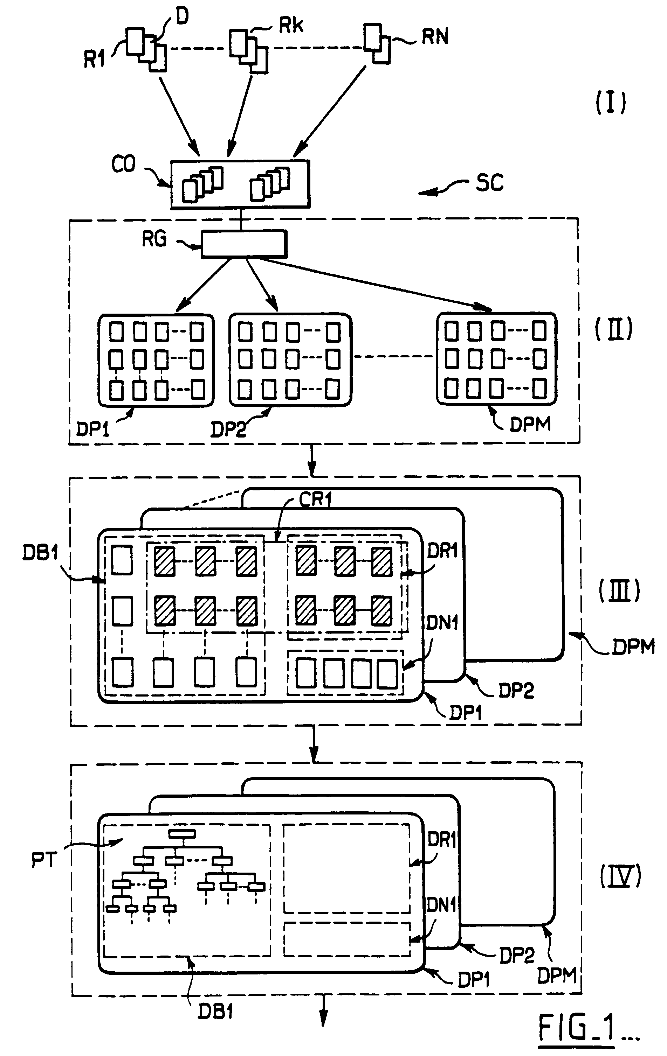

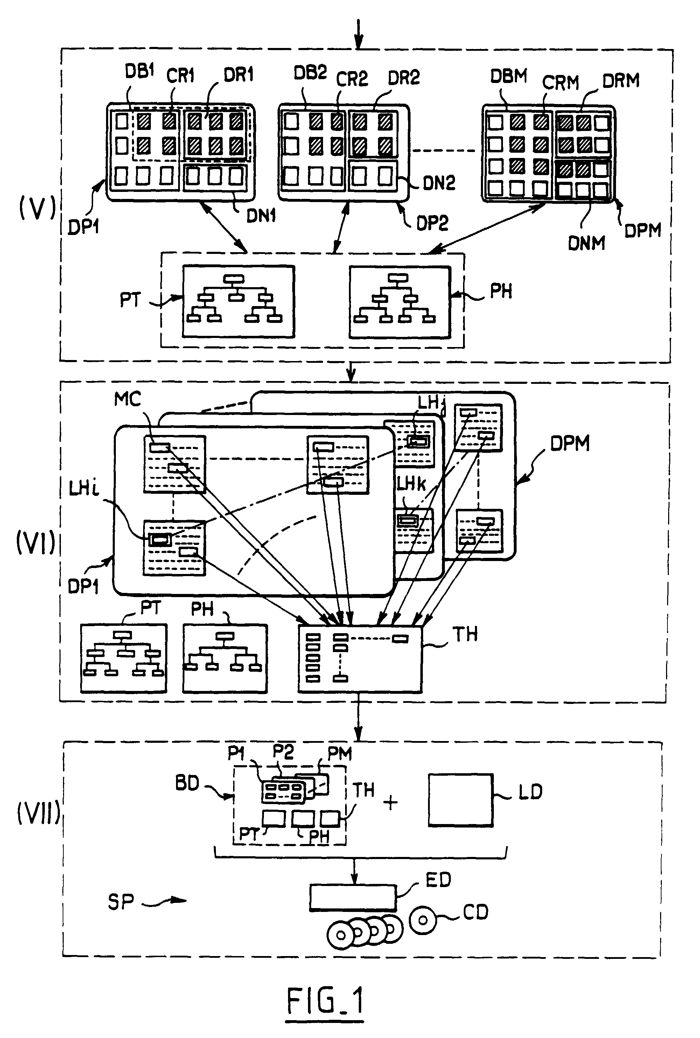

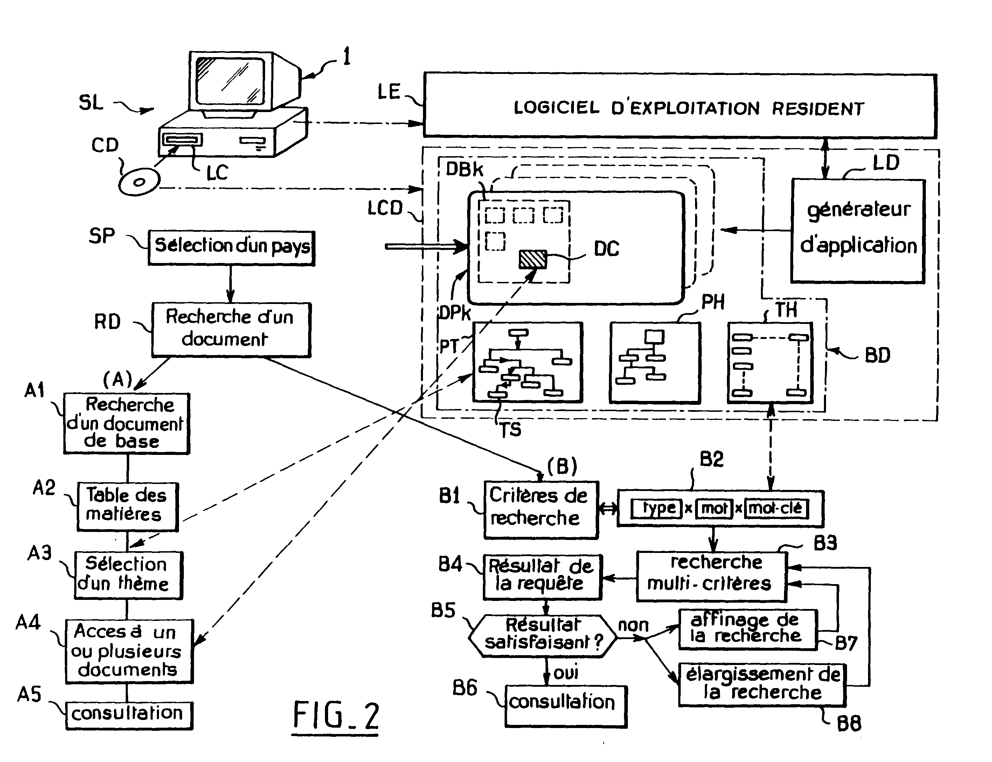

On va maintenant décrire une forme préférée de mise en oeuvre d'un procédé de traitement et d'accès conforme à l'invention, en même temps qu'un exemple de réalisation d'un système de traitement et d'accès pour la mise en oeuvre de ce procédé, en référence aux figures 1 et 2 précitées.

Dans l'exemple pratique de mise en oeuvre du procédé de traitement et accès selon l'invention, qui va être décrit dans la suite, il s'agit de mettre à disposition d'utilisateurs une base documentaire axée sur la réglementation en matière d'enregistrement de médicaments, base qui est consultée sur un micro-ordinateur équipé de moyens de lecture de disques CD-ROM. Dans cet exemple, les objets collectés, triés, classés et recherchés sont des documents constitués de textes, de tableaux, éventuellement de graphismes.

On va en premier lieu décrire les étapes d'élaboration de la base documentaire, en référence à la figure 1. Une première étape I du procédé selon l'invention consiste à collecter au niveau d'un site central SC des documents D rédigés notamment par des experts R1, Rk,.., RN ou communiqués par des institutions et organismes habilités. Ces documents collectés CO sont saisis et formatés selon un format commun. Une seconde étape II consiste à réaliser un regroupement RG des différents documents collectés en plusieurs groupes de documents DP1, DP2,.., DPM par zone géographique, en l'occurrence par pays P1, P2,.., PM et/ou par zone régionale telle que l'Union Européenne. L'étape suivante III peut être une étape de classification des documents de chaque pays P1, P2,..PM en plusieurs types de documents. A titre d'exemple, on peut prévoir les types suivants: les documents de base DB1, les documents de référence DR1, et les notes DN1. Par ailleurs, cette classification en types pourrait fort bien être effectuée avant le regroupement par pays.

Dans une quatrième étape IV , les documents de base DB1 sont classés selon une table de matières TM qui est commune à tous les pays. Le plan de classement correspondant PT est de préférence une arborescence de thèmes comportant un nombre élevé de niveaux, par exemple douze.

Le procédé selon l'invention prévoit également une étape V de classement des documents constituant un corpus réglementaire CR1, CR2,.., CRM (représentés en mode hachuré), ce classement étant effectué selon un plan hiérarchique PH commun à tous les pays P1, P2,.., PM. Ce plan hiérarchique PH comporte plusieurs niveaux, et peut être également structuré sous la forme d'une arborescence.

Chaque document peut comporter un ou plusieurs mots-clés MC caractérisant un sujet traité et destinés aux recherches multi-critères. Ces mots-clés ainsi que des expressions-clés sont regroupés avec leur alias de recherche dans un thésaurus TH. On dispose également au sein des documents des balises LHi, LHj, LHk correspondant à des liens hypertexte permettant une navigation entre différents documents de la base documentaire, selon une technique désormais bien connue et largement répandue.

A l'issue des étapes de traitement précitées I-VI, on dispose ainsi d'une base documentaire BD structurée par pays P1, P2,.., PM à laquelle sont associés un plan PT de table des matières, un plan hiérarchique PH et un thésaurus TH.

Il faut noter que les étapes de traitement précitées I-VI peuvent être réalisées dans un ordre chronologique différent de celui qui vient d'être décrit. Ainsi, les documents peuvent être affectés de mots-clés et de balises pour liens hypertexte avant d'être regroupés par pays. Il en est de même pour leur classification par type qui peut également être réalisée avant le regroupement par pays.

A l'issue des étapes de traitement I-VI, dans une étape d'édition VII réalisée sur un site de production SP, la base documentaire BD et un générateur d'application dédié LD sont inscrits suivant un processus de reproduction connu ED sur des supports permanents d'information CD, tels que des disques CD-ROM ou tout autre support équivalent. Ces supports sont ensuite diffusés à des utilisateurs.

On va maintenant décrire les différentes étapes d'accès effectuées sur un site local SL au cours d'une utilisation d'une base documentaire BD élaborée avec le procédé selon l'invention, en référence à la figure 2.

Après insertion d'un disque CD incluant la base documentaire BD concernée dans un lecteur LC d'une station de travail 1 normalement pourvue d'un logiciel d'exploitation résident LE, et mise en route de ce logiciel, le générateur d'application LD et le logiciel d'exploitation résident LE coopèrent pour exploiter la base documentaire. L'utilisateur dispose de préférence d'une présentation en mode fenêtre largement répandue sur les micro-ordinateurs. Dans une première fenêtre, il est généralement invité (SP) à sélectionner un ou plusieurs pays. Cette sélection a pour effet de distinguer dans la base documentaires BD les groupes de documents DPk correspondant au(x) pays sélectionné(s). Pour la recherche (RD) d'un document, au moins deux voies sont proposées à l'utilisateur.

Une première voie (A) consiste à effectuer une recherche (A1) de documents de base en consultant (A2) la table des matières TM. Ceci a pour effet technique de naviguer dynamiquement et graphiquement dans l'arborescence jusqu'à ce que l'utilisateur identifie le ou les thèmes qui l'intéressent. Lorsqu'il a sélectionné (A3) un thème, le procédé selon l'invention indique le nombre de documents DC correspondant à ce thème, offre un accès (A4) à ces documents et fournit un résumé pour chacun desdits documents que l'utilisateur peut consulter (A5) en vue de demander l'affichage d'un ou plusieurs documents pertinents.

Une seconde voie (B) proposée à l'utilisateur consiste en une sélection multicritère d'un document quelconque de la base documentaire BD. Dans une première étape (B1), l'utilisateur choisit une combinaison de critères de recherche (B2) qui peuvent être notamment:
- le(s) type(s) de documents,
- le(s) mot(s) devant figurer dans le document,
- le(s) mot(s)-clé(s) attaché(s) au document.

Le procédé selon l'invention réalise alors une recherche multicritère (B3) qui conduit à un résultat de la requête (B4) généralement sous la forme d'un nombre de documents identifiés comme satisfaisant la combinaison de critères choisie. Ce résultat permet à l'utilisateur de déterminer si la recherche a été satisfaisante (B5), auquel cas il peut effectuer une consultation (B6) du ou des documents identifiés. Dans le cas contraire, l'utilisateur peut être amené soit à affiner la recherche (B7), soit à élargir cette recherche (B8).

Pour la recherche multicritère, on peut également prévoir une combinaison logique de mots conduisant à une recherche de type "plein texte". Un affichage de listes présentant à l'utilisateur des chois possibles (index "plein texte", index des mots-clés) facilite l'expression de la requête de recherche.

Par ailleurs, lorsqu'un document consulté par l'utilisateur comporte des balises de liens hypertexte LHi, LHj, LHk, matérialisées par un artifice graphique par exemple de la couleur et/ou des caractères gras, celui-ci peut naviguer entre différents documents de la base au gré des liens hypertexte reliant ces documents et représentant une association logique entre eux. Ces liens hypertexte résultent d'une analyse croisée effectuée par les rédacteurs des documents, et peuvent être ce trois natures :
- des liens de référence qui permettent un accès direct à un texte cité dans un document source,
- des liens structurels qui unissent différentes parties d'un même texte réglementaire ayant été découpé pour une meilleure lisibilité, et
- des liens de commentaire, permettant notamment un accès à des notes personnelles que l'utilisateur peut attacher à certains documents.

On peut également prévoir des Liens hypertexte offrant un accès immédiat à une définition d'une expression, ou à une signification d'un acronyme via un appel direct à un glossaire intégré à la base documentaire.

Un autre mode de recherche offert par le procédé selon l'invention consiste à effectuer une navigation interactive dans le plan de classement hiérarchique PH du corpus réglementaire CR1, CR2,.., CRM d'un ou plusieurs pays sélectionnés P1, P2,.., PM, à sélectionner un document et à l'afficher pour le consulter.

Le procédé de traitement et d'accès selon l'invention offre au gestionnaire de la base documentaire une grande souplesse dans la mise à jour de cette base. En effet, au fur et à mesure que de nouveaux documents sont reçus d'experts rédacteurs, ces documents peuvent être traités en mode continu et rejoindre les groupes géographiques auxquels ils correspondent. Les nouveaux documents viennent alors se substituer à des documents désormais obsolètes ou périmés, sont classifiés et rejoignent les niveaux thématiques appropriés au sein de l'arborescence. De nouvelles éditions de disques constamment mises à jour sont réalisées et diffusées périodiquement.

Bien sûr, l'invention n'est pas limitée aux exemples qui viennent d'être décrits et de nombreux aménagements peuvent être apportés à ces exemples sans sortir du cadre de l'invention. Ainsi, les nombres de zones géographiques, de types de documents et de thèmes de la table des matières peuvent être choisis en fonction des besoins des utilisateurs et de révolution des marchés. Les supports permanents d'information peuvent être des disques CD-ROM comme cela vient d'être décrit, mais également des disques CD-I (Compact Disc Interactif) ou tout autre support permanent d'information, réinscriptible ou non.

## Revendications

1. Procédé pour traiter et accéder à des objets d'information (D), notamment des documents, comprenant:
- en au moins un site central (SC),
- des étapes (I) pour collecter des objets,
- des étapes pour classer les objets ainsi collectés, et
- des étapes pour générer une base structurée (BD) contenant les objets ainsi classés,
caractérisé en ce que chaque étape de classement comprend :
- un regroupement (II) des objets collectés, en des groupes d'objets (DP1, DP2, DPM) associés respectivement à des zones géographiques données (P1, P2, PM),
- une classification (III) de chaque objet en plusieurs types d'objets (DB1, DR1, DN1),
- un premier classement (IV), dans chaque groupe d'objets (DP1, DP2, DPM), des objets appartenant à l'un au moins des types d'objets (DB1), selon une table des matières (TM) comportant un ensemble de thèmes et commune à tous les groupes d'objets (DP1, DP2, DPM), cette table des matières (TM) étant associée à un premier plan de classement dit thématique (PT),
- un second classement (V), dans chaque groupe d'objets (DP1, DP2, DPM), d'une partie des objets collectés constituant un groupe particulier d'objets (CR1, CR2, CRM), selon un second plan de classement dit hiérarchique (PH) commun à tous les groupes d'objets (DP1, DP2, DPM),
et en ce qu'il comprend en outre, au sein du site central (SC), une étape (VI) pour sélectionner au sein de chaque objet collecté des éléments-clés (MC), ces éléments-clés étant regroupés au sein d'un thésaurus (TH), et en ce que les étapes d'accès comprennent des étapes de sélection selon au moins un critère (B2) incluant un critère de sélection par élément-clé.

2. Procédé selon la revendication 1, comprenant en outre
- en au moins un site de production (SP),
- des étapes pour reproduire sur des supports permanents d'information (CD) la base structurée (BD) ainsi générée,
- et en plusieurs sites locaux de consultation (SL),
- des étapes pour accéder à un ou plusieurs objets (DC) au sein de la base structurée (BD), ces étapes d'accès comprenant des étapes pour rechercher des objets sur un support permanent d'information (CD), caractérisé en ce que chaque étape pour accéder à un objet comprend en outre une étape (SP) pour sélectionner au moins une zone géographique (Pk) suivie d'une étape pour naviguer au sein des zones géographiques sélectionnées (Pk), cette étape de navigation pouvant parcourir l'un quelconque des premier et second plans de classement (PT, PH).

3. Procédé selon l'une des revendications 1 ou 2, pour le traitement et l'accès à des documents, caractérisé en ce que les documents collectés sont classifiés par type en documents de base (DB1), documents de référence (DR1) et notes (DN1).

4. Système pour traiter et accéder à des objets (D), pour la mise en oeuvre du procédé selon l'une des revendications 1 à 3, comprenant :
- en au moins un site central (SC),
- des moyens pour collecter des objets (D),
- des moyens pour classer les objets ainsi collectés, et
- des moyens pour générer une base structurée (BD) contenant les objets ainsi classés,
- en au moins un site de production (SP),
- des moyens (ED) pour reproduire sur des supports permanents d'information (CD) ia base structurée ainsi générée (BD),
- et en plusieurs sites locaux de consultation (SL),
- des moyens (1, LC) pour accéder à un ou plusieurs objets (DC) au sein de la base structurée (BD), ces moyens d'accès comprenant des moyens pour rechercher des objets sur un support permanent d'information (CD),
caractérisé en ce que les moyens de classement comprennent :
- des moyens pour regrouper les objets collectés (D), en des groupes d'objets (DP1, DP2, DPM) associés respectivement à des zones géographiques données (P1, P2, PM),
- des moyens pour classifier chaque objet en plusieurs types d'objets (DB1, DR1, DN1),
- des moyens pour réaliser, dans chaque groupe d'objets (DP1, DP2, DPM), un premier classement des objets appartenant à l'un au moins des types d'objets, selon une table des matières (TM) comportant un ensemble de thèmes et commune à tous les groupes d'objets (DP1, DP2, DPM), cette table des matières (TM) étant associée à un premier plan de classement dit thématique (PT),
- des moyens pour réaliser, dans chaque groupe d'objets (DP1, DP2, DPM), un second classement d'une partie des objets collectés constituant un groupe particulier d'objets (CR1), selon un second plan de classement dit hiérarchique (PH) commun à tous les groupes d'objets (DP1, DP2, DPM),
- des moyens pour sélectionner au sein de chaque objet collecté des éléments-clés (MC) et
- des moyens pour regrouper au sein d'un thésaurus (TH) ces éléments-clés.

5. Système selon la revendication 4, caractérisé en ce que les moyens pour accéder à un objet comprennent en autre des moyens pour sélectionner un objet selon au moins un critère (B2) incluant un critère de sélection par élément-clé.

6. Système selon l'une des revendications 4 ou 5, caractérisé en ce que les moyens pcur accéder à un objet comprennent en outre des moyens pour sélectionner au moins une zone géographique (Pk) et des moyens pour naviguer au sein des zones géographiques sélectionnées (Pk), ces moyens de navigation étant agencés pour parcourir l'un quelconque des premier et second plans de classement (PT, PH).

## Patentansprüche

1. Verfahren zur Bearbeitung und zum Zugriff auf Informationsobjekte (D), insbesondere Dokumente, bestehend aus:
- mindestens einem zentralen Standort (SC),
- Etappen (I) zum Sammeln der Objekte,
- Etappen zur Einteilung der auf diese Weise gesammelten Objekte, und
- Etappen zur Erzeugung einer strukturierten Basis (BD), die die auf diese Weise eingeteilten Objekte enthält,
dadurch gekennzeichnet, daß jede Einteilungsetappe umfaßt:
- eine Zusammenfassung (II) der gesammelten Objekte zu Objektgruppen (DP1, DP2, DPM), die jeweils gegebenen geographischen Bereichen (P1, P2, PM) zugeteilt sind,
- eine Einteilung (III) jedes Objekts in mehrere Objekttypen (DB1, DR1, DN1),
- eine erste Einteilung (IV) in jede Objektgruppe (DP1, DP2, DPM) jener Objekte, die mindestens einem der Objekttypen (DB1) angehören, nach einem Register (TM), das eine Gesamtheit von Themen umfaßt und allen Objektgruppen (DP1, DP2, DPM) gemein ist, wobei dieses Register (TM) einem ersten, sogenannten thematischen Einteilungsplan (PT) zugeteilt ist,
- eine zweite Einteilung (V) in jede Objektgruppe (DP1, DP2, DPM) eines Teils der gesammelten Objekte, die eine besondere Objektgruppe (CR1, CR2, CRM) darstellen, nach einem zweiten, sogenannten hierarchischen Einteilungsplan (PH), der allen Objektgruppen (DP1, DP2, DPM) gemein ist,
und daß es ferner innerhalb des zentralen Standortes (SC) eine Etappe (VI) umfaßt, um innerhalb jedes gesammelten Objektes Schlüsselelemente (MC) auszuwählen, wobei diese Schlüsselelemente innerhalb eines Thesaurus (TH) zusammengefaßt werden, und daß die Zugriffsetappen Auswahletappen nach mindestens einem Kriterium (B2) umfassen, das ein Auswahlkriterium pro Schlüsselelement einschließt.

2. Verfahren nach Anspruch 1, ferner bestehend aus:
- mindestens einem Produktionsstandort (SP),
- Etappen, um auf permanenten Informationsträgern (CD) die auf diese Weise erzeugte strukturierte Basis (BD) zu reproduzieren,
- und mehreren lokalen Konsultationsstandorten (SL),
- Etappen, um auf ein oder mehrere Objekte (DC) innerhalb der strukturierten Basis (BD) zuzugreifen, wobei diese Zugriffsetappen Etappen umfassen, um Objekte auf einem permanenten Informationsträger (CD) zu suchen,
dadurch gekennzeichnet, daß jede Etappe für den Zugriff auf ein Objekt ferner eine Etappe (SP) umfaßt, um mindestens eine geographische Zone (Pk) auszuwählen, gefolgt von einer Etappe, um innerhalb der ausgewählten geographischen Zonen (Pk) zu navigieren, wobei diese Navigationsetappe irgendeine der ersten und zweiten Einteilungsebenen (PT, PH) durchlaufen kann.

3. Verfahren nach einem der Ansprüche 1 oder 2, für die Bearbeitung und den Zugriff auf Dokumente, dadurch gekennzeichnet, daß die gesammelten Dokumente pro Typ in Basisdokumente (DB1), Referenzdokumente (DR1) und Anmerkungen (DN1) eingeteilt werden.

4. System für die Bearbeitung und den Zugriff auf Objekte (D) für den Einsatz des Verfahrens nach einem der Ansprüche 1 bis 3, bestehend aus:
- mindestens einem zentralen Standort (SC),
- Mitteln zum Sammel der Objekte (D),
- Mitteln zur Einteilung der auf diese Weise gesammelten Objekte, und
- Mitteln, um eine strukturierte Basis (BD) zu erzeugen, die die auf diese Weise eingeteilten Objekte enthält,
- mindestens einem Produktionsstandort (SP),
- Mitteln (ED), um auf permanenten Informationsträgern (CD) die auf diese Weise erzeugte strukturierte Basis (BD) zu reproduzieren,
- und mehreren lokalen Konsultationsstandorten (SL),
- Mitteln (1, LC), um auf ein oder mehrere Objekte (DC) innerhalb der strukturierten Basis (BD) zuzugreifen, wobei diese Zugriffsmittel Mittel umfassen, um Objekte auf einem permanenten Informationsträger (CD) zu suchen,
dadurch gekennzeichnet, daß die Einteilungsmittel umfassen:
- Mittel, um die gesammelten Objekte (D) zu Objektgruppen (DP1, DP2, DPM) zusammenzufassen, die jeweils gegebenen geographischen Zonen (P1, P2, PM) zugeteilt sind,
- Mittel, um jedes Objekt in mehrere Objekttypen (DB1, DR1, DN1) einzuteilen,
- Mittel, um in jeder Objektgruppe (DP1, DP2, DPM) eine erste Einteilung der Objekte durchzuführen, die mindestens einem der Objekttypen angehören, nach einem Register (TM), das eine Gesamtheit von Themen umfaßt und allen Objektgruppen (DP1, DP2, DPM) gemein ist, wobei dieses Register (TM) einem ersten, sogenannten thematischen Einteilungsplan (PT) zugeordnet ist,
- Mittel, um in jeder Objektgruppe (DP1, DP2, DPM) eine zweite Einteilung eines Teils der gesammelten Objekte, die eine besondere Objektgruppe (CR1) darstellen, nach einem zweiten, sogenannten hierarchischen Einteilungsplan (PH) vorzunehmen, der allen Objektgruppen (DP1, DP2, DPM) gemein ist,
- Mittel, um innerhalb jedes gesammelten Objekts Schlüsselelemente (MC) auszuwählen und
- Mittel, um innerhalb eines Thesaurus (TH) diese Schlüsselelemente zusammenzufassen.

5. System nach Anspruch 4, dadurch gekennzeichnet, daß die Mittel für den Zugriff auf ein Objekt ferner Mittel für die Auswahl eines Objekts nach mindestens einem Kriterium (B2), das ein Auswahlkriterium pro Schlüsselelement einschließt, umfassen.

6. System nach einem der Ansprüche 4 oder 5, dadurch gekennzeichnet, daß die Mittel für den Zugriff auf ein Objekt ferner Mittel für die Auswahl zumindest einer geographischen Zone (Pk) und Mittel für die Navigation innerhalb der ausgewählten geographischen Zonen (Pk) umfassen, wobei diese Navigationsmittel derart angeordnet sind, daß sie irgendeine der ersten und zweiten Einteilungsebenen (PT, PH) durchlaufen.

## Claims

1. Method for processing and accessing information objects (D), especially documents, comprising:
- on at least one central site (SC):
- stages (I) of collecting objects,
- stages of classifying the objects thus collected, and
- stages of generating a structured database (BD) containing the objects thus classified,
characterised in that each classification stage comprises:
- a grouping (II) of the collected objects together into groups of objects (DP1, DP2, DPM) associated respectively with given geographical areas (P1, P2, PM),
- a categorisation (III) of each object into several types of objects (DB1, DR1, DN1),
- a first classification (IV), in each group of objects (DP1, DP2, DPM), of the objects belonging to at least one of the types of objects (DB1), according to a table of contents (TM) including a set of topics and common to all the groups of objects (DP1, DP2, DPM), this table of contents (TM) being associated with a first classification scheme known as topic-based classification scheme (PT),
- a second classification (V), in each group of objects (DP1, DP2, DPM), of some of the collected objects constituting a particular group of objects (CR1, CR2, CRM), according to a second classification scheme, called hierarchical scheme (PH) common to all the groups of objects (DP1, DP2, DPM),
and in that it further comprises, within the central site (SC), a stage (VI) of selecting key elements (MC) within each collected object, these key elements being grouped together within a thesaurus (TH), and in that the accessing stages comprise stages of selection according to at least one criterion (B2) including a criterion of selection by key element.

2. Method according to Claim 1, further comprising
- on at least one production site (SP),
- stages of reproducing the structured database (BD) thus generated on permanent information media (CD),
- and, on several local consultation sites (SL),
- stages of accessing one or more objects (DC) within the structured database (BD), these accessing stages comprising stages of searching for the objects on a permanent information medium (CD),
characterised in that each stage of accessing an object further comprises a stage (SP) of selecting at least one geographical area (Pk) followed by a stage of navigating within the selected geographical areas, this navigation stage being capable of covering either of the first and second classification schemes (PT, PH).

3. Method according to one of Claims 1 and 2, for processing and accessing documents, characterised in that the collected documents are categorised by type into basic documents (DB1), reference documents (DR1) and notes (DN1).

4. System for processing and accessing objects (D), for implementing the method according to one of Claims 1 to 3, comprising:
- on at least one central site (SC),
- means for collecting objects (D),
- means for classifying the objects thus collected, and
- means for generating a structured database (BD) containing the objects thus classified,
- on at least one production site (SP),
- means (ED) for reproducing the structured database (BD) thus generated on permanent information media (CD),
- and, on several local consultation sites (SL),
- means (1, LC) for accessing one or more objects (DC) within the structured database (BD), these accessing means comprising means for searching for the objects on a permanent information medium (CD),
characterised in that the classification means comprise:
- means for grouping the collected objects (D) together into groups of objects (DP1, DP2, DPM) associated respectively with given geographical areas (P1, P2, PM),
- means for categorising each object into several types of objects (DB1, DR1, DN1),
- means for carrying out, in each group of objects (DP1, DP2, DPM), a first classification of the objects belonging to at least one of the types of objects, according to a table of contents (TM) including a set of topics and common to all the groups of objects (DP1, DP2, DPM), this table of contents (TM) being associated with a first classification scheme known as topic-based classification scheme (PT),
- means for carrying out, in each group of objects (DP1, DP2, DPM), a second classification of some of the collected objects constituting a particular group of objects (CR1), according to a second classification scheme, -called hierarchical scheme (PH) common to all the groups of objects (DP1, DP2, DPM),
- means for selecting key elements (MC) within each collected object and
- means for grouping these key elements together within a thesaurus (TH).

5. System according to Claim 4, characterised in that the means of accessing an object further comprise means for selecting an object according to at least one criterion (B2) including a criterion of selection by key element.

6. System according to one of Claims 4 and 5, characterised in that the means for accessing an object further comprise means for selecting at least one geographical area (Pk) and means for navigating within the selected geographical areas (Pk), these navigation means being configured so as to cover either of the first and second classification schemes (PT, PH).
